# EUROPEAN PATENT APPLICATION

(11) **EP 4 415 307 A1**
(43) Date of publication of application: **14.08.2024**
(21) Application number: 23195741.6
(22) Date of filing: 06.09.2023
(51) Int. Cl.: H04L 9/32, H04L 9/00

(54) **BLOCKCHAIN-BASED ELECTRONIC VOTING SYSTEM AND METHOD WITH ZERO-KNOWLEDGE PROOF**

(30) Priority: 07.02.2023 KR 20230015970
(71) Applicant: Zkrypto Inc, Seoul 04763 (KR)
(72) Inventor: OH, Hyunok, Seoul 05698 (KR)
(74) Representative: Bernsmann, Falk

(57) **Abstract**

Disclosed herein is a blockchain-based electronic voting device with a zero-knowledge proof. The blockchain-based electronic voting device with the zero-knowledge proof includes a communication interface (500) to communicates with a voter terminal (100) carried by each of voters to perform an electronic vote; and a controller (510) for issuing one real voting key and at least one fake voting key to the voter terminal (100) to proceed with the electronic vote, assigning a secret value provided by the voter terminal (100) as a unique number of the electronic vote during the electronic voting process, and performing an operation of determining and verifying an authenticity of the electronic vote based on the real voting key and the secret value.

## Description

### TECHNICAL FIELD

The present invention relates to a blockchain-based electronic voting system and method including a zero-knowledge proof, and more particularly, to a blockchain-based electronic voting system and method for constructing a ballot box by using a blockchain and performing the zero-knowledge proof by using a zero-knowledge succinct non-interactive argument of knowledge (zk-SNARK), one of zero-knowledge proofs that simultaneously satisfy coercion resistance and verifiability.

### BACKGROUND ART

A K-voting is an online voting system officially used by the Korea Election Commission. However, in the case of the K-voting, it has only the feature of using blockchain for online elections, but basic privacy of the voter is not protected. In K-voting, when the voter casts a ballot, all of corresponding contents are recorded on the blockchain, and central administrators can check all of the contents, so it is possible to check all the details of which the voter voted for which candidate, which is in direct violation of a principle of secret elections.

Designing a voting system that has both privacy protection and legitimacy is an impossible and difficult problem with above simple approach, and it is a field that has been studied with a long history. Among the current overseas research cases, well-known research systems that guarantee privacy may include a vVote, a Helios, and a JCJ. The vVote is a system that has been put into practical use based on the theory of RBH+09 and is being tested on an actual US local election platform, and is a hybrid voting system created by combining offline and online vote. The vVote satisfies 'verifiability' by converting ballot papers into an electronic vote in offline vote, allowing voters to check whether voter's own votes have been properly reflected in the voting results. However, the vVote basically satisfies the voter's privacy protection, but since the vote itself remains as a result of the individual's performance and the voter can reproduce his or her vote again, therefore, 'coercion resistance' is not properly satisfied. In here, coercion resistance may mean the degree to which the vote may be protected from coercion.

Although the JCJ first presented a definition of 'coercion resistance' and suggested a solution, 'verifiability' was not satisfied. However, in the JCJ, coercion resistance is satisfied by tricking an attacker by using a fake voting key. However, the fake voting key must be created by the voter himself by using a real voting key. In case that the attacker is spying on the voter after the voter issued the real voting key, the voter may not be able to generate the fake voting key. In addition, in order to count voting results, it is necessary to be able to distinguish the real voting key from the fake voting key.

The Helios is an online election system that is also being introduced as a test operation for local elections in the United States, and includes a feature that satisfies privacy protection in an electronic voting environment. However, the Helios assumes that identities of the voters are certain and there is no coercion, and since the voters cannot confirm that the votes of the voters are reflected in results, 'verifiability' is not satisfied.

As described above, it is important for the electronic voting system to satisfy both privacy protection and verifiability, and there is a need to develop technology for the electronic voting system that satisfies both coercion resistance, which is the most powerful property in terms of privacy, and end-to-end verifiability, which is the most powerful property in terms of verifiability.

### Prior Art

### Patent

(Patent Document 0001) Korean Patent No. 10-2410269(2022.06.14)
(Patent Document 0002) Korean Publication No. 10-2022-0107420(2022.08.02)
(Patent Document 0003) Korean Publication No. 10-2021-0089682(2021.07.16)

### Non-patent Document

(Non-patent Document 0001) K-voting, Korean National Election Commission Online Voting System

(Non-patent Document 0002) Ben Adida. Helios: Web-based open-audit voting. In USENIX security symposium, volume 17, pages 335-348, 2008.

(Non-patent Document 0003) Chris Culnane, Pater YA Ryan, Steve Schneider, and Vanessa Teague. vVote: a verifiable voting system. ACM Transactions on Information and System Security (TISSEC), 18(1):3, 2015.

(Non-patent Document 0004) Peter YA Ryan, David Bismark, james Heather, Steve Schneider, and Zhe Xia. Pret a voter: a voter-verifiable voting system. IEEE transactions on information forensics and security, 4(4):662-673-2009.

(Non-patent Document 0005) Ari Juels, Dario Catalano, and Markus Jakobsson. Coercion-resistant electronic elections. Towards Trustworthy Elections, pp. 37-63. Springer, 2010.

### SUMMARY OF THE INVENTION

### Technical Problem

The present invention provides a blockchain-based electronic voting system and method with a zero-knowledge proof that uses zk-SNARK, one of zero-knowledge proofs, to configure a ballot box by using a blockchain and simultaneously satisfy coercion resistance and verifiability.

Tasks of the present invention are not limited to the tasks mentioned above, and other technical tasks not mentioned will be clearly understood by those skilled in the art from following descriptions.

### Problem Solving Means

According to an aspect of the inventive concept, a blockchain-based electronic voting device with a zero-knowledge proof may include: a communication interface to communicates with a voter terminal carried by each of voters to perform an electronic vote; and a controller for issuing one real voting key and at least one fake voting key to the voter terminal to proceed with the electronic vote, assigning a secret value provided by the voter terminal as a unique number of the electronic vote during the electronic voting process, and performing an operation of determining and verifying an authenticity of the electronic vote based on the real voting key and the secret value.

In case that the electronic vote is conducted with the fake voting key, the controller may exclude a result of the electronic vote in a tally based on a decryption result of decoding a cipher text of the electronic vote to 0.

The controller may track the electronic vote conducted in the voter terminal based on a first secret value and a second secret value assigned for each of the electronic votes performed in the voter terminal.

The controller may perform the zero-knowledge proof of the real voting key or the fake voting key by using a zero-knowledge succinct non-interactive argument of knowledge (zk-SNARK) to determine the authenticity of the electronic vote.

In case that the tally of the electronic vote is completed, the controller may disclose a cipher text used in the tally and a result of the tally to the voter terminal of the voter to allow the voter to verify the result of the tally and a result of the electronic vote conducted by the voter.

The controller may communicate with the voter terminal to confirm an issuance of the real voting key, and disguise the fake voting key as the real voting key by using a non-interactive communication with the voter terminal.

In addition, according to another aspect of the inventive concept, a method of driving a blockchain-based electronic voting device with a zero-knowledge proof, may include:
communicating with a voter terminal carried by each of voters and performing an electronic vote by means of a communication interface; issuing one real voting key and at least one fake voting key to the voter terminal to proceed with the electronic vote by a controller; assigning a secret value provided by the voter terminal as a unique number of the electronic vote during the electronic voting process by the controller; and performing an operation of determining and verifying an authenticity of the electronic vote based on the real voting key and the secret value by the controller.

The driving method may further include, in case that the electronic vote is conducted with the fake voting key, excluding a result of the electronic vote in a tally based on a decryption result of decoding a cipher text of the electronic vote to 0 by the controller.

The driving method may further include tracking the electronic vote conducted in the voter terminal based on a first secret value and a second secret value assigned for each of the electronic votes performed in the voter terminal by the controller.

The determining the authenticity of the electronic vote may include performing the zero-knowledge proof of the real voting key or the fake voting key by using a zero-knowledge succinct non-interactive argument of knowledge (zk-SNARK).

In case that the tally of the electronic vote is completed, the driving method may further include: disclosing a cipher text used in the tally and a result of the tally to the voter terminal of the voter; and verifying the result of the tally and a result of the electronic vote conducted by the voter.

The driving method may further include: communicating with the voter terminal to confirm an issuance of the real voting key; and disguising the fake voting key as the real voting key by using a non-reciprocal communication with the voter terminal.

### Effects of the Invention

According to an embodiment of the present invention, it is possible to implement a voting system that protects privacy and satisfies verifiability by using a zk-SNARK and a fake voting key issuance algorithm in a blockchain-based electronic voting system. In particular, it is possible to implement the voting system that satisfies coercion resistance, which is the highest level of privacy protection in the electronic voting system, and end-to-end verifiability, which is the highest level of verifiability.

Effects according to the embodiments are not limited to contents exemplified above, and more various effects may be included in this specification.

### BRIEF DESCRIPTION OF THE DRAWINGS

FIG. 1 is a diagram to show a blockchain-based electronic voting system according to an embodiment of the present invention.
FIG. 2 is a diagram to schematically illustrate a process of an electronic vote performed in the system of FIG. 1.
FIG. 3 is a diagram to explain a verifiable encryption/decryption method based on a public key.
FIG. 4 is a diagram to explain a process of encryption/decryption with a real key and a fake key.
Figure 5 is a block diagram to illustrate a detailed structure of the blockchain electronic voting device of Figure 1.
FIG. 6 is a flowchart to illustrate a driving process of the blockchain electronic voting device of FIG. 1.
FIG. 7 is a diagram to show an algorithm of a setting phase.
FIG. 8 is a diagram to show an algorithm of a registration phase.
FIG. 9 is a diagram to show a simulation of a key provision algorithm.

### DETAILED DESCRIPTION OF THE EMBODIMENTS

Advantages and features of the present invention, and methods of achieving the advantages and features will become clear with reference to detailed descriptions of following embodiments taken in conjunction with the accompanying drawings. However, the present invention is not limited to the embodiments disclosed below, and may be implemented in a variety of different forms, and the embodiments are only provided to complete the disclosure of the present invention and to fully inform those skilled in the art of the scope of the present invention to which the present invention belongs, and the present invention is only defined by the scope of claims.

It should be understood that any flow diagrams, state transition diagrams, pseudo codes, and etc. may be substantially represented on a computer readable medium and represent various processes performed by a computer or processor, whether or not the computer or processor is explicitly depicted.

Functions of various elements including a processor or similar functional block shown in the drawings may be provided by dedicated hardware as well as hardware capable of executing appropriate software. When the functions are provided by the processor, the introduced functions may be provided by a single dedicated processor, a single shared processor, or a plurality of separate processors, and some of the functions may be shared by the processors. The same reference number refers to the same element throughout the specification.

Hereinafter, specific embodiments will be described with reference to the accompanying drawings.

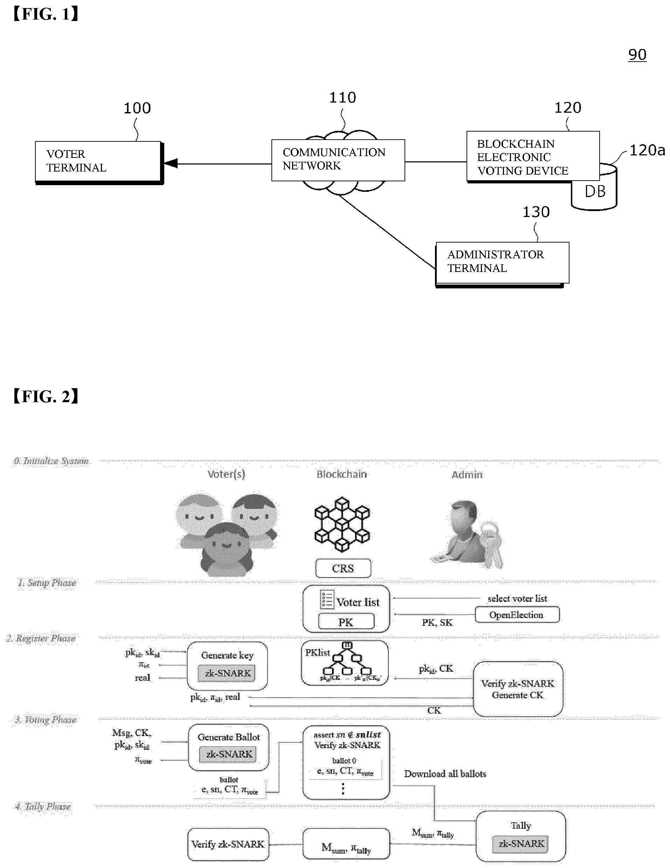

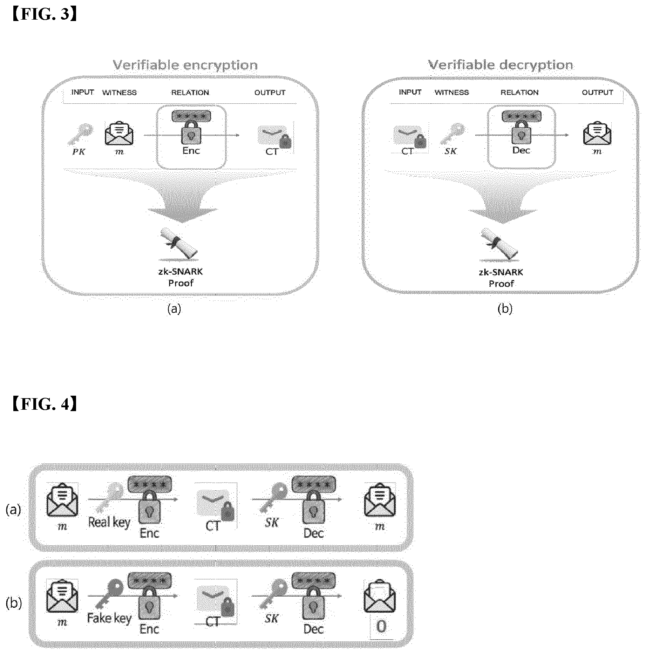

FIG. 1 is a diagram to show a blockchain-based electronic voting system according to an embodiment of the present invention, FIG. 2 is a diagram to schematically illustrate a process of an electronic vote performed in the system of FIG. 1, FIG. 3 is a diagram to explain a verifiable encryption/decryption method based on a public key, and FIG. 4 is a diagram to explain a process of encryption/decryption with a real key and a fake key.

As shown in FIG. 1, a blockchain-based electronic voting system 90 according to an embodiment of the present invention may include some or all of a voter terminal 100, a communication network 110, a blockchain electronic voting device 120, and an administrator terminal 130.

In here, "including some or all" may include an expression intended to indicate that the blockchain-based electronic voting system 90 of FIG. 1 may be constructed by omitting some components, such as the administrator terminal 130, and that some or all of the components constructing the blockchain electronic voting device 120 may be integrated into a network device (e.g., a wireless exchange device, and the like) constructing the communication network 110, and all components are described inclusive to facilitate understanding of the present invention.

The voter terminal 100 may include various types of terminal that perform an electronic vote by accessing the blockchain electronic voting device 120 via the communication network 110 of FIG. 1. The voter terminal 100 according to an embodiment of the present invention may include not only mobile-based terminal such as smart phones, tablet PCs, and wearable devices worn by users or voters on their wrists, but also a PC-based terminal such as desktop computers and laptop computers. In order to maintain a secret vote, which is a feature of the vote, it is preferable to perform an electronic vote by using a mobile terminal owned by an individual, but even in the case of the PC-based terminal, if confidentiality of the electronic vote can be maintained, the PC-based terminal may be used for the electronic vote according to an embodiment of the present invention. For example, in the case of a single person, the PC-based terminal may be provided in space where the single person lives, and in this case, since confidentiality is maintained for the electronic vote, the PC-based terminal may be used for the electronic vote, so the embodiment of the present invention will not be particularly limited to any one terminal.

The voters possessing the voter terminal 100 may access the blockchain electronic voting device 120 and perform a web-based electronic vote, and it is also possible to perform the electronic vote based on an App, that is, application. In addition, the electronic vote according to an embodiment of the present invention may be used for the vote to elect public officials, such as local elections, National Assembly elections, and furthermore, presidential elections, and may also include all the electronic vote conducted to elect representatives or resident representatives in an apartment complex or elect student president at university, therefore, in an embodiment of the present invention, type of the vote in which the electronic vote is performed will not be particularly limited. Above all, in the case of elections for public officials, each of the voters may conduct a plurality of votes, including a party vote for proportional representation elections and a vote for election of local members of the National Assembly. Therefore, each of the voters who possesses the voter terminal 100 according to an embodiment of the present invention may proceed with the electronic vote by setting a unique number, that is, a secret value, for each of the votes so as to facilitate voting verification. Accordingly, verification may be freely performed on results of the vote conducted by the voter by using the secret value. In the case of a plurality of votes (e.g., proportional representation and local member elections), it may be possible to track all votes cast by the voter himself.

More specifically, when the voter conducts the electronic vote by using the voter terminal 100 owned by the voter, since data is distributed and stored in a ballot box generated by the blockchain electronic voting device 120 and operated in the form of a blockchain, distortion of electronic voting results due to hacking may not occur, and when the voter conducts the electronic vote in the voter terminal 100, the electronic vote may be conducted based on pre-registered voter information, at this time, the electronic vote may be conducted by issuing a real voting key and a fake voting key to prevent voting behavior from being coerced by a third party. In issuing the voting keys, only one real voting key may be issued, but a plurality of fake voting keys may be issued, and a desired number of the fake voting keys may be decided at the request of voters. Accordingly, the voter terminal 100 may vote by using the fake voting key if there is coercion when conducting the electronic vote, and in the case of voting with the fake voting key, the blockchain electronic voting device 120 may verify the corresponding voting behavior, that is, the voting result, based on the zero-knowledge proof, and may treat the voting result as an invalid vote so that the voting result may not be reflected in a tally. In addition, by processing the voting results based on the zero-knowledge proof, in an embodiment of the present invention, the blockchain electronic voting device 120 may detect that coercion has occurred in the voting behavior of a specific voter, and appropriate measures may be taken. For example, by detecting a behavior pattern of the voter, it may be determined whether coercion or not.

In addition, for example, when the vote is conducted to elect a member of the National Assembly, a local government member, a local government head, or a proportional representative, the voter may cast the electronic vote by assigning a secret value, i.e., a unique number, to each ballot by using the voter terminal 100 in order to verify the voting results of all the votes cast by the voter. The secret value may include a password, or biometric authentication information may be used. Accordingly, a valid vote may be verified by using the real voting key and the secret value, and in the case of voting by designating the secret value to the fake voting key, it may be invalidated in the tally, and it may also be verified whether the vote has been invalidated. In this way, each voter may not only check the final tally of the direct vote performed by the voter by accessing the blockchain electronic voting device 120, but also verify whether the corresponding vote is fraudulent by performing verification on the electronic vote performed by the voter. Above all, since the tally is checked in an encrypted state, a principle of the secret vote may be observed, furthermore, security may be maintained because election officials check the tally in an encrypted state so that no one knows who voted for whom. Other details will be discussed later.

The communication network 110 may include both wired and wireless communication networks. In addition, the communication network 110 may use a wired or wireless Internet network or may be interlocked. In here, the wired network may include the Internet network such as a cable network or a public switched telephone network (PSTN), and the wireless communication network may include code division multiple access (CDMA), wideband code division multiple access (WCDMA), global system/standard for mobile communication (GSM), Evolved Packet Core (EPC), Long Term Evolution (LTE), and Wi-bro network. The communication network 110 according to an embodiment of the present invention is not limited thereto, and may include an access network of a next-generation mobile communication system to be implemented in the future, for example, a cloud computing network under a cloud computing environment, a 5G network, and the like. For example, in the case that the communication network 110 is a wired communication network, an access point within the communication network may access an exchange center of a telephone company, but in the case of a wireless communication network, it may process data by accessing an Serving GPRS Support Node (SGSN) or a Gateway GPRS Support Node (GGSN) operated by a communication company, or may process data by accessing various repeaters such as Base Transceiver Station (BTS), NodeB, and e-NodeB.

The communication network 110 may include the access point. The access point may include a small base station such as a femto or pico base station that is often installed in a building. The femto or pico base stations may be classified according to how many the voter terminal 100 or the like are may be connected to the maximum in terms of classification of small base stations. The voter terminal device 100 may include a short-range communication module for performing short-range communication such as ZigBee and Wi-Fi. The access point may use transmission control protocol/internet protocol (TCP/IP) or Real-Time Streaming Protocol (RTSP) for the wireless communication. The short-range communication may be performed in various standards such as Bluetooth, ZigBee, infrared data association (IrDA), radio frequency (RF) such as ultra-high frequency (UHF) and very high frequency (VHF), and ultra-wideband communication (UWB) in addition to Wi-Fi. Accordingly, the access point may extract location of data packet, designate the best communication path for the extracted location, and forward the data packet to a next device, for example, the blockchain electronic voting device 120, along the designated communication path. The access point may share multiple lines in a general network environment, and may include routers, repeaters, repeaters, and the like.

The blockchain electronic voting device 120 may process and manage results of the electronic vote based on blockchain technology. In other words, when the voters conduct the electronic vote by using the voter terminal 100, the blockchain electronic voting device 120 may distribute, store, and manage electronic voting data. Basically, meaning of the blockchain is not to store and manage data in a centralized server or DB 120a, but when a transaction occurs, the data may be distributed and stored in multiple nodes, and when there is an approval agreement in the multiple nodes, it is a technology that may modify or record the data, which is already obvious to those skilled in the art, so further explanation is omitted. However, in the embodiment of the present invention, it is preferable to apply the blockchain technology in order to prevent distortion of the electronic vote, but the present invention is not especially limited to an use of blockchain technology.

The blockchain electronic voting device 120 may configure a ballot box by using the blockchain. In order to configure the ballot box, the blockchain electronic voting device 120 may also be linked with the administrator terminal 130 possessed by a staff of the election commission of FIG. 1. Because the blockchain may not modify the recorded data, it is possible to prevent manipulation of voting process. The blockchain electronic voting device 120 may use the zk-SNARK, one of the zero-knowledge proofs, to simultaneously satisfy the coercion resistance, that is, prevention of voting by coercion, and verifiability. The zero-knowledge proof may mean that the voting result becomes '0' by decryption of encryption. A prover may generate a proof that public input/output and secret input/output satisfy a specific relational expression, and a verifier may simply verify this proof by using public input/output. The voter who acts as the verifier may prove that he or she is a legitimate voter and that the vote has been correctly encrypted, and an identity of the voter is not revealed at all. The blockchain electronic voting device 120 may communicate with the voter terminal 100 to participate in the previously introduced operation.

The electronic voting system according to an embodiment of the present invention may be divided into four phases. The four sages may be shown in FIG. 2 and be divided into a setting phase, a registration phase, a voting phase, and a tally phase. In the initial preparation phase, the blockchain ballot box and voting keys for encryption may be set, and a voter registration may be performed in the registration phase. The voters may receive the voting key during the registration phase. In addition, the voters may select and receive the real voting key or the fake voting key. The fake voting keys may be issued and used an unlimited number of times, and when voting with the fake voting key, a cipher text of the vote may be decrypted to 0 and be not reflected in the tally result. In this way, the blockchain electronic voting device 120 may issue the voting key, and when the vote is conducted, the blockchain electronic voting device 120 may determine whether or not to reflect the vote in the tally by practicing the decryption of the corresponding vote, and may perform a tally operation.

For example, in conventional studies, an attacker cannot distinguish between the fake voting keys and real voting keys, but an aggregator may be designed to be able to distinguish between the fake voting keys and real voting keys, therefore, the design is complicated, and since the aggregator is able to distinguish fake votes, complexity of the aggregation phase may be recognized as a drawback. However, in the embodiment of the present invention, the coercion resistance may be satisfied in a more secure manner because no one may distinguish whether the voting key is real or fake and whether the vote is real or fake. In addition, the tally phase may be simplified because the fake vote is decoded so that the fake vote is not reflected in the tally results.

Furthermore, in the voting phase, the voters may track their votes by attaching the unique number to each ballot, and check whether their votes are reflected in the ballot box. After the vote is completed, everyone may see encrypted votes in the ballot box, and when the tally is over, the tallying results may be also published on the blockchain. Everyone including the voters may verify the tally result, and since the voters may also verify whether their vote is well reflected in the tally result, the end-to-end verifiability may be satisfied. The blockchain electronic voting device 120 according to an embodiment of the present invention may operate to satisfy the end-to-end verification.

The administrator terminal 130 may include terminals, such as a desktop computer or laptop computer, owned by the staffs of the Election Commission that may access the blockchain electronic voting device 120 of FIG. 1, may register voter information, and may monitor the voting process. In addition, when the vote is completed, the administrator terminal 130 may disclose the tally result to the voter terminal 100 through the blockchain electronic voting device 120 of FIG. 1.

Summarizing contents so far, in the embodiment of the present invention, the voter may be issued a key for the vote before the electronic vote begins. The voting keys may be issued as many times as the voters want, and only one may be designated as the real voting key. The voters may use the fake voting keys to vote under the coercion. Since the real voting keys and fake voting keys are indistinguishable and the votes conducted with these keys are also indistinguishable, which may deceive the attacker. The voters may track their votes by attaching the secret value to the unique number of the ballot. In addition, the votes of the voters may be proven as the valid votes by using the zero-knowledge proof and included in the ballot boxes implemented as public blockchains. The public ballot boxes using blockchain may not be arbitrarily manipulated by anyone. After the tally phase is over, everyone may see the ciphertext and results used for counting, and since the voters may verify their ciphertext, the verifiability may be satisfied.

According to an embodiment of the present invention, it is possible to implement the voting system that may protect the privacy and satisfy the verifiability by using the zk-SNARK and a fake voting key issuance algorithm in the blockchain-based electronic voting system 90. In particular, it is possible to implement the voting system that may satisfy the coercion resistance, which is the highest level of privacy protection of the electronic voting system 90, and the end-to-end verifiability, which is the highest level of verifiability.

The electronic voting system 90 according to an embodiment of the present invention may correspond to an electronic voting system that satisfies both the privacy protection (coercion resistance) and the verifiability. In order to prove possibility, in an embodiment of the present invention, an Android smartphone application was created and an experiment was performed. Furthermore, it has been successfully conducted not only for Android smartphone experiments but also for iPhone Operating System (iOS) smartphone experiment. As a result of the experiment, it was confirmed that execution time for ballot generation was about 6 seconds, which is convenient for use in a real vote.

Prior to a detailed description, requirements of the voting system for the experiment according to an embodiment of the present invention may include board-integrity, a ballot-privacy, coercion-resistant, individual-verifiability, universal-verifiability, eligibility-verifiability, tally-uniqueness, voter-anonymity, and non-repudiation. The board-Integrity may mean that a public bulletin board must be tamperproof, the ballot-privacy may mean that the voter can privatize their choice, and the coercion-resistant may mean that the voter is able to cast a vote despite adversarial influence. In addition, the individual-verifiability may mean that the voter must be able to verify an inclusion of their vote, the universal-verifiability may mean that anyone must be able to verify that the tally result represents all the ballots, and the eligibility-verifiability may mean that the ballot can only be generated from an eligible voter with a voting right. The tally-uniqueness may mean that the tally result is unique in its accurate representation of the polls, the voter-anonymity may mean that the ballot is able to conceal voter identity, and the non-repudiation may mean that all ballots are unique and there exists no proxy votes.

For the experiment according to an embodiment of the present invention, the blockchain, the zk-SNARK, and the fake voting key were configured and performed. By constructing the blockchain, once the ballot is uploaded to the blockchain, no one, including the National Election Commission, may falsify the ballot. Furthermore, by constructing the zk-SNARK, the voter may protect their privacy and prove that their votes are true. By constructing the fake voting key, the blockchain electronic voting device 120 may invalidate the corresponding vote through decryption in the case that the fake voting key is used to encrypt data.

Furthermore, the blockchain electronic voting device 120 according to an embodiment of the present invention may perform a public key-based verifiable encryption/decryption technique and a voting technique using the zk-SNARK protocol. Messages may be created in a cryptographic way that encrypts the voting data and checks that certain relations are satisfied when decrypting the cipher text. FIG. 3 shows each of the verifiable encryption/decryption methods based on the public key. In addition, the blockchain electronic voting device 120 may use the above public key-based verifiable encryption/decryption scheme to encrypt the vote, and use the zk-SNARK protocol to achieve the verifiability that hides the identity of the voter. Implementing the fake voting key algorithm may allow the voting system to meet the coercion resistance. As previously introduced, each cipher text derived from the real voting key and the fake voting key may be indistinguishable. Therefore, results of the decrypted cipher text generated with the fake voting key may be invalid. FIG. 4 shows the results of decrypted cipher text when the real voting key and the fake voting key is used, respectively. Referring to FIG. 4, when the encryption is performed by applying a specific function to the real voting key and the fake voting key, the specific (inverse) function may be applied to the cipher text using the public key SK during the decryption. At this time, if the fake voting key is used, a processing result during the decryption may be 0.

Table 1 shows the experimental results according to an embodiment of the present invention. This is a result of applying the present invention to a device using iOS and a device based on the ARM architecture. In addition, Table 1 may show items such as CRS size and execution time in the registration, voting, and tally phases. Table 1 may show that the voting phase takes 6 seconds.

**[Table 1]**

| | | CRS size (kB) | execution time (ms) | execution cost (gas) |
|---|---|---|---|---|
| Register Phase | prove | 124.7 | 716.5 | |
| | verify | | | 87801890 |
| Vote Phase | prove | 5829.5 | 6253.2 | |
| | verify | | | 347363 |
| Tally Phase | prove | 2450.7 | 16183 | 349288 |
| | verify | | 763 | |

Since the zk vote, which is an electronic voting protocol, is applied in the embodiment of the present invention, the voters may protect their personal information and resist centralized authorities by using the zk vote. In addition, it is possible to secure the coercion resistance by designing a verifiable encryption/decryption method based on the public key and a forgery key algorithm. The enforcer (or adversary) may not tell the difference between the real voting key and the real voting key on the ballot. As a result, the zk-SNARK confirmed that the zk vote may guarantee the privacy protection of the voter and verifiability, and the experiment was conducted with the smartphone app used by the voters in daily life for easy access.

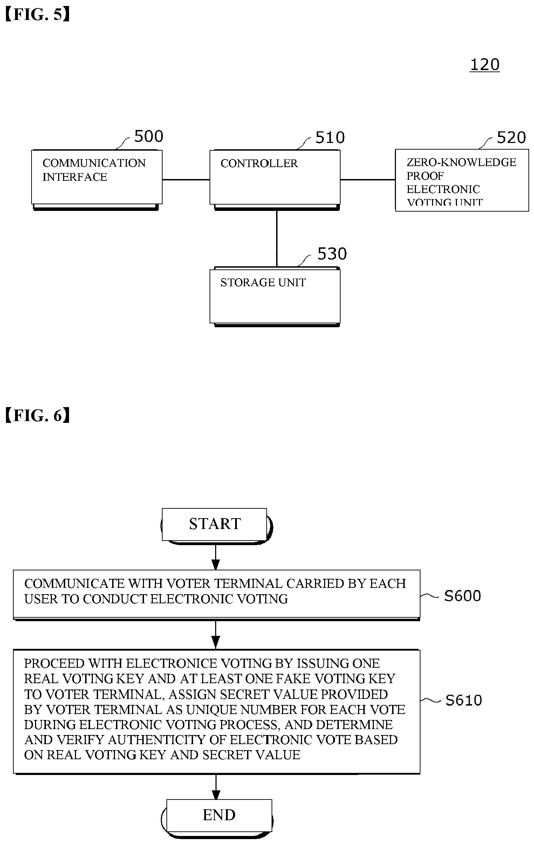

FIG. 5 is a block diagram to illustrate a detailed structure of a blockchain electronic voting device of Figure 1.

As shown in FIG. 5, the blockchain electronic voting device 120 according to an embodiment of the present invention may include a part or all of a communication interface 500, a controller 510, a zero-knowledge proof electronic voting unit 520, and a storage unit 530.

The phrase "include a part or all of" in the preceding paragraph may include configurations in which the blockchain electronic voting device 120 is constructed by omitting some components, such as the storage unit 530, and configurations in which the zero-knowledge proof electronic voting unit 520 is integrated into other components, such as the controller 510, but all configurations are described to provide a sufficient understanding of the present invention.

The communication interface 500 may communicate with the voter terminal 100 and the administrator terminal 130 respectively via the communication network 110 of FIG. 1. In the course of the communication, the communication interface 500 may perform operations such as modulation/demodulation, muxing/demuxing, encoding/decoding, encryption/decryption, and scaling to convert resolution. Since this is obvious to those skilled in the art, further explanation is omitted. For example, since all voter terminals 100 such as smart phones that perform the electronic voting include different resolutions, operations such as the scaling may be performed in the communication interface 500 to provide an optimized voting screen. However, according to an embodiment of the present invention, in the case of the encryption and decryption, the vote may be performed by using the real voting key and the fake voting key, and furthermore, the secret value (or unique value) set by the voter for each vote may be encrypted together, but may be applied without encryption.

In addition, the communication interface 500 may perform an operation for issuing the real voting key and the fake voting key according to a request of the voter terminal 100 when the voter is the registered eligible voter. Such an operation may be performed under control of the controller 510. In addition, the communication interface 500 may proceed with the verification in the case that the voter terminal 100 requests the verification even after the vote is completed, and it may be possible to track the result of the vote by using the secret value set by the voter. The communication interface 500 may be involved in above operations.

The controller 510 may be in charge of overall control operations of the communication interface 500, the zero-knowledge proof electronic voting unit 520, and the storage unit 530 shown in FIG. 5. For example, the controller 510 may determine whether the voter is the eligible person when the vote is started in the voter terminal 100 of FIG. 1. For example, the controller 510 may determine whether the voter is eligible based on an input voter number. In addition, if the person is determined to be eligible, that is, if the voter is determined to be the registered voter by the National Election Commission, one real voting key may be issued obligatory at the request of the voter, and when at least one fake voting key is requested, the voters may receive as many fake voting keys as they. The fake voting keys may be issued at the request of the voter, but it is also possible to automatically issue based on the result of determining a risk level based on location information of the voter terminal 100, therefore, according to an embodiment of the present invention, it will not be particularly limited to any one form. The controller 510 may control the zero-knowledge proof electronic voting unit 520 to issue the voting keys described above.

In addition, in the case that the vote is completed, the controller 510 may temporarily store the voting data in the storage unit 530, call the voting data stored in the storage unit 530 out, and provide the voting data stored in the storage unit 530 to the zero-knowledge proof electronic voting unit 520. Furthermore, if the encryption of the vote is decrypted through the communication interface 500 before providing the voting data, the decrypted data may be temporarily stored in the storage unit 530, may be called out, and may be provided to the zero-knowledge proof electronic voting unit 520, so that the zero-knowledge proof may be achieved. However, since both the decryption and zero-knowledge proof may be performed in the zero-knowledge proof electronic voting unit 520, an embodiment of the present invention will not be particularly limited to any one form. The controller 510 may be involved in the operations introduced above in association with the zero-knowledge proof electronic voting unit 520.

In addition, the controller 510 may disclose the encrypted votes in the ballot box after the voting is completed for everyone to see, and when the tally is finished, the tally result may also be disclosed to the blockchain. To this end, the controller 510 may control the zero-knowledge proof electronic voting unit 520. In other words, when the zero-knowledge proof electronic voting unit 520 generates the tally results in a designated format and provides the tally results to the controller 510, the controller 510 may provide a tally result screen to the voter terminal 100 or administrator terminal 130 of FIG 1.

The zero-knowledge proof electronic voting unit 520 may issue the real voting key and the fake voting key for the electronic vote. As mentioned above, the real voting key may be issued after determining whether the voter is a qualified person, but at least one fake key may be issued according to the request of the voter, or at least one fake voting key may be automatically issued by tracking the location of the voter terminal 100 where the vote is currently being conducted and determining the degree of risk. For example, in the case that the location of the voter terminal 100 is decided to be a home, in the case that the location of the voter terminal 100 is decided to be outside, or in the case that other people's smartphones are detected in the vicinity, etc., the fake voting key may be issued based on the degree of risk. In addition, in order to increase accuracy of the risk decision, a deep learning program of artificial intelligence may be used to learn data and use the learned data to increase the accuracy.

In addition, when the vote is conducted with the fake voting key by using the voter terminal 100 of FIG. 1, the zero-knowledge proof electronic voting unit 520 may decrypt the cipher text of the vote into 0 and exclude the voting result from the tally result. As such, the zero-knowledge proof electronic voting unit 520 may perform the zero-knowledge proof using the zk-SNARK, one of the zero-knowledge proof methods, and prove that the corresponding vote is a valid vote. In addition, when the corresponding vote is proven to be the valid vote through the zero-knowledge proof, the zero-knowledge proof electronic voting unit 520 may add the corresponding voting result to the ballot box implemented as the public blockchain. Therefore, the public ballot box using the blockchain may not be arbitrarily manipulated by anyone.

Furthermore, after the vote is completed and the tally is completed, the zero-knowledge proof electronic voting unit 520 may allow everyone to see the ciphertext used for the tally and the result, and operate such that the voters verify their ciphertext. For example, when the voter terminal 100 of FIG. 1 requests the verification of the ciphertext of the voter terminal 100, the zero-knowledge proof electronic voting unit 520 may provide data related thereto to enable the verification. In addition, the zero-knowledge proof electronic voting unit 520 may operate to enable the tracking of all votes when each of the voters performs a plurality of votes as described above. For this operation, the voter may check the secret value set for each vote, and the zero-knowledge proof electronic voting unit 520 may provide the voting result by using the secret value.

It is important for the electronic voting system to satisfy both the privacy protection and verifiability. The coercion resistance, which is the most powerful properties in terms of the privacy protection, and the end-to-end verifiability, which is the most powerful properties in terms of the verifiability, must be satisfied simultaneously. The zero-knowledge proof electronic voting unit 520 may operate to satisfy both the privacy protection and verifiability.

The storage unit 530 may temporarily store various types of data processed by the controller 510. For example, when the zero-knowledge proof electronic voting unit 520 generates the tally result and the controller 510 requests to store the tally result in the DB 120a of FIG. 1, the storage unit 530 may temporarily store the tally result under the control of the controller 510.

In addition to the contents disclosed above, the communication interface 500, the controller 510, the zero-knowledge proof electronic voting unit 520, and the storage unit 530 of FIG. 5 may perform various operations, and since other details are described above, no further explanation will be needed.

According to an embodiment of the present invention, the communication interface 500, the controller 510, the zero-knowledge proof electronic voting unit 520, and the storage unit 530 disclosed in FIG. 5 are described as physically separated hardware modules, however, each module may store and execute software for performing the disclosed operation therein. However, since the corresponding software is a set of software modules, each module may be formed of hardware, therefore, the present invention is not particularly limited to software or hardware configuration. For example, the storage unit 530 may include a hardware storage or memory. However, since information may also be stored in software, the configuration of the storage unit 530 is not limited to the hardware storage or memory.

According to another embodiment of the present invention, the controller 510 may include a CPU and a memory, and may be formed as a single chip. The CPU may include a control circuit, an arithmetic unit (ALU), a command interpreter, and a registry, and the memory may include RAM. The control circuit may perform a control operation, the ALU may perform an operation of binary bit information, the command interpreter may include an interpreter or a compiler to perform an operation of converting high-level language into machine language and the machine language into the high-level language, and the registry may be involved in software data storage. According to the above configuration, at a beginning of the operation of the blockchain electronic voting device 120, since a program stored in the zero-knowledge proof electronic voting unit 520 may be copied and loaded into the memory, that is, RAM, and then executed, processing speed may increase rapidly. In the case of a deep learning model, since the program is loaded into a Graphic Processor Unit (GPU) memory rather than the RAM and processed by using the GPU, the execution speed may be accelerated and executed.

FIG. 6 is a flowchart to show a driving process of the blockchain electronic voting device of FIG. 1.

Referring to FIG. 6 together with FIG. 1 for convenience of explanation, the blockchain electronic voting device 120 according to the embodiment of the present invention may communicate with the voter terminal (or user terminal) 100 carried by each user and performing the electronic vote (S600).

In addition, the blockchain electronic voting device 120 may proceed with the electronic voting by issuing one real voting key and at least one fake voting key to the voter terminal 100, may assign the secret value provided by the voter terminal device 100 as the unique number for each vote during the electronic voting process, and may determine and verify the authenticity of the electronic vote based on the real voting key and secret value (S610).

For example, when the electronic vote is performed by using the fake voting key, the decryption result may become 0, and thus the corresponding electronic vote may be invalidated. In addition, for the zero-knowledge proof, the zk-SNARK may be used in the embodiment of the present invention. The zero-knowledge proof may satisfy the privacy protection (coercion resistance). In addition, the blockchain electronic voting device 120 may disclose the tally results to the voters in an encrypted state for the end-to-end verification, as a result, the voters may confirm and verify their voting results, and the electronic vote may secure integrity by tracking the results of a plurality of votes by using secret values set by the voters.

In addition to the described above, the blockchain electronic voting device 120 of FIG. 1 may perform various operations, and details may be omitted to avoid duplication.

Hereinafter, a program, that is, a protocol, in which the voter registers the real voting key and/or the fake voting key with the Election Commission and receives a key issuance will be described.

The blockchain electronic voting device 120 of FIG. 1 may verify the issuance of the real voting key by using an interactive communication with the voter terminal 100, and disguise the fake voting key as the real voting key by using a non-interactive communication through the voter terminal 100 of the voter. The non-interactive communication may mean a state in which interactive communication is not performed.

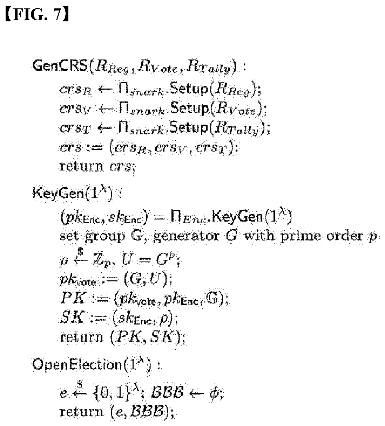

Figure 7 shows an algorithm of the setting phase.

Referring to FIG. 7, in a GenCRS phase, a crs for a relational expression defined for the zk-SNARK proof in the registration, voting, and tally phases may be generated.

In a KeyGen phase, a public key PK and private key SK may be set by generating a key for encrypting the electronic vote and a key for the voting system.

In an OpenElection phase, the unique voting number e of the voting system may be set and the ballot box BBB may be initialized.

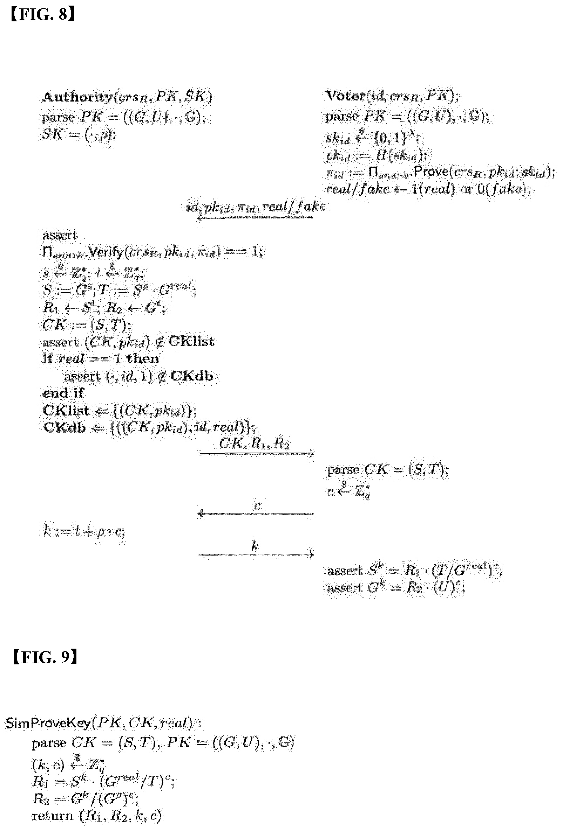

FIG. 8 shows an algorithm of the registration phase, and FIG. 9 shows a simulation of the key provision algorithm.

During the registration phase, each voter may hash their private key a skid to create a pkid and generate the zk-SNARK proof for this process. The voters may select whether to use the generated the pkid as the real or fake voting key and send an id, the pkid, a πid, and a real/fake to the administrator (e.g., 1 for the real voting key selection or 0 for the fake voting key selection may be sent to the administrator).

The administrator (or administrator terminal) 130 may verify whether the pkid is a correctly generated value by using the πid, generate a voting key CK and a zero-knowledge proofs Ri and R₂, and send the zero-knowledge proofs R₁ and R₂ to the voters. A CKlist may be a public value on the blockchain, and even if these values are known, it may be safe because anyone may not know whose key it is. A CKdb may be managed by the administrators and may prevent the voters from being issued a plurality of the real voting keys (in the case that the real/fake is 1). The voter may not unconditionally trust the administrator and may verify by using the R₁ and R₂ whether the received CK is generated correctly (e.g., whether the specified protocol is followed or whether the real/fake selected by the voter is properly reflected). When the voter sends random a c back to the administrator, the administrator may calculate a k by using a t used to create the CK and own secret key ρ, and may send the k to the voter. By using the k, R₁, and R₂, the voter may verify whether the received CK is correctly calculated by using the t. However, the voters may not know values of the t and ρ.

A SimProveKey may be an algorithm for the voters to simulate the R₁, R₂, c, and k. The voters may prove that the corresponding CK is the fake voting key even if it is the real voting key, and conversely, the voters may also create a proof that the fake voting key is the real voting key. In the case of supposing that the voter is coerced and the corresponding voting key CK is exposed, if the corresponding voting key is the real key (when real=1), the voter may use the SimProveKey to create a proof that the CK is a fake key and fool the attacker. When the attacker requests the voting key, if the voter may provide the fake voting key and prove that the voting key is the real voting key, the attacker may be bound to be tricked. This is because if the attacker sees the key itself, the attacker may not tell if the voting key is the real voting key or the fake voting key.

On the other hand, although it has been described that all the components according to an embodiment of the present invention may operate by being combined or combined into one, the present invention is not limited thereto. That is, if it falls within the scope of the object of the present invention, all components may be selectively combined with one or more to operate. In addition, all components may be implemented as a single independent piece of hardware, and some or all of the components may be selectively combined to be implemented as a computer program including a program module capable of performing some or all of the functions performed by one or a plurality of pieces of hardware. Codes and code segments constituting a computer program may be easily inferred by a person skilled in the art. Such a computer program may implement an embodiment of the present invention by being stored in a computer-readable non-transitory computer readable medium, read and executed by a computer.

The non-transitory readable recording medium may be not a medium that stores data for a short moment, such as a register, cache, or memory, but a medium that may store the data semi-permanently and may be read by a device. Specifically, the above-described programs may be provided by being stored in a non-transitory readable recording medium such as a CD, DVD, hard disk, Blu-ray disk, USB, memory card, or ROM.

Although the embodiments of the present invention have been described with reference to the accompanying drawings, those skilled in the art to which the present invention pertains will understand that the present invention may be implemented in other specific forms without changing the technical spirit or essential characteristics of the present invention. Therefore, the embodiments described above should be understood as illustrative and not restrictive in all respects.

### DESCRIPTION OF THE NUMERALS

100 : VOTER TERMINAL
110 : COMMUNICATION NETWORK
120 : BLOCKCHAIN ELECTRONIC VOTING DEVICE
130 : ADMINISTRATOR TERMINAL
500 : COMMUNICATION INTERFACE
510 : CONTROLLER
520 : ZERO-KNOWLEDGE PROOF ELECTRONIC VOTING UNIT
530 : STORAGE UNIT

## Claims

1. A blockchain-based electronic voting device with a zero-knowledge proof, comprising:
a communication interface (500) to communicates with a voter terminal (100) carried by each of voters to perform an electronic vote; and
a controller (510) for issuing one real voting key and at least one fake voting key to the voter terminal (100) to proceed with the electronic vote, assigning a secret value provided by the voter terminal (100) as a unique number of the electronic vote during the electronic voting process, and performing an operation of determining and verifying an authenticity of the electronic vote based on the real voting key and the secret value.

2. The blockchain-based electronic voting device of claim 1, wherein, in the case that the electronic vote is conducted with the fake voting key, the controller (510) excludes a result of the electronic vote in a tally based on a decryption result of decoding a cipher text of the electronic vote to 0.

3. The blockchain-based electronic voting device of claim 1, wherein the controller (510) tracks the electronic vote conducted in the voter terminal (100) based on a first secret value and a second secret value assigned for each of the electronic votes performed in the voter terminal (100).

4. The blockchain-based electronic voting device of claim 1, wherein the controller (510) performs the zero-knowledge proof of the real voting key or the fake voting key by using a zero-knowledge succinct non-interactive argument of knowledge (zk-SNARK) to determine the authenticity of the electronic vote.

5. The blockchain-based electronic voting device of claim 1, wherein, in the case that the tally of the electronic vote is completed, the controller (510) discloses a cipher text used in a tally and a result of the tally to the voter terminal (100) of the voter to allow the voter to verify the result of the tally and a result of the electronic vote conducted by the voter.

6. The blockchain-based electronic voting device of claim 1, wherein the controller (510) communicates with the voter terminal (100) to confirm an issuance of the real voting key, and disguises the fake voting key as the real voting key by using a non-interactive communication with the voter terminal (100).

7. A method of driving a blockchain-based electronic voting device with a zero-knowledge proof, comprising:
communicating with a voter terminal (100) carried by each of voters and performing an electronic vote by a communication interface (500);
issuing one real voting key and at least one fake voting key to the voter terminal (100) to proceed with the electronic vote by a controller (510);
assigning a secret value provided by the voter terminal (100) as a unique number of the electronic vote during the electronic voting process by the controller (510); and
performing an operation of determining and verifying an authenticity of the electronic vote based on the real voting key and the secret value by the controller (510).

8. The method of claim 7, further including, in the case that the electronic vote is conducted with the fake voting key, excluding a result of the electronic vote in a tally based on a decryption result of decoding a cipher text of the electronic vote to 0 by the controller (510).

9. The method of claim 7, further includes tracking the electronic vote conducted in the voter terminal (100) based on a first secret value and a second secret value assigned for each of the electronic votes performed in the voter terminal (100) by the controller (510).

10. The method of claim 7, wherein the determining the authenticity of the electronic vote includes performing the zero-knowledge proof of the real voting key or the fake voting key by using a zero-knowledge succinct non-interactive argument of knowledge (zk-SNARK).

11. The method of claim 7, in the case that a tally of the electronic vote is completed, further including:
disclosing a cipher text used in the tally and a result of the tally to the voter terminal (100) of the voter; and
verifying the result of the tally and a result of the electronic vote conducted by the voter.

12. The method of claim 7, further including:
communicating with the voter terminal (100) to confirm an issuance of the real voting key; and
disguising the fake voting key as the real voting key by using a non-interactive communication with the voter terminal (100).
